(19) Europäisches Patentamt
European Patent Office
Office européen des brevets

(11) **EP 2 812 196 B1**

## (12) EUROPEAN PATENT SPECIFICATION

(45) Date of publication and mention
of the grant of the patent:
**27.04.2016 Bulletin 2016/17**

(21) Application number: **13703098.7**

(22) Date of filing: **08.02.2013**

(51) Int Cl.:
***B60C 15/06*** (2006.01)   ***B60C 3/04*** (2006.01)
***B60C 9/02*** (2006.01)

(86) International application number:
**PCT/EP2013/052575**

(87) International publication number:
**WO 2013/117711 (15.08.2013 Gazette 2013/33)**

(54) **REINFORCED LIGHTWEIGHT TYRE**

LEICHTGEWICHTIGE VERSTÄRKTE REIFEN

PNEU LÉGER RENFORCÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.02.2012 FR 1251279
15.06.2012 US 201261660078 P**

(43) Date of publication of application:
**17.12.2014 Bulletin 2014/51**

(73) Proprietors:
• **Compagnie Générale des Etablissements
Michelin
63000 Clermont-Ferrand (FR)**
• **MICHELIN Recherche et Technique S.A.
1763 Granges-Paccot (CH)**

(72) Inventor: **FERIGO, Hervé
F-63040 Clermont-Ferrand Cedex 9 (FR)**

(74) Representative: **Millanvois, Patrick Jacques Jean
Manufacture Française
des Pneumatiques Michelin
23, place des Carmes - Déchaux
DGD/PI - F35 - Ladoux
63040 Clermont-Ferrand Cedex 9 (FR)**

(56) References cited:
**EP-A1- 2 116 398   WO-A1-99/22952**

**Description**

FIELD OF THE INVENTION

The present invention relates to the radial tyres for land vehicles and more particularly to radial tyres for passenger vehicles. The invention relates more particularly to lightweight tyres and to the arrangements suitable for increasing the resistance of these tyres to the damage to which they are exposed when they hit obstacles on the ground, such as pavements or potholes.

BACKGROUND

Research on tyres serving to reduce the energy consumption of a vehicle is presently gaining momentum. Among the promising approaches explored by tyre designers, mention may be made of reducing the rolling resistance of tyres, especially by the use of low-hysteresis materials, but also reducing the tyre weight. It has been proposed to reduce the tyre weight by reducing the thicknesses of material and the densities of the reinforcing elements (use of textile cords) or of the rubber compounds, or by using reinforcing elements which allow reduction of certain volumes of inner liner compounds, for example in the region of the bead. Such tyres are described for example in U.S. patent US 6,082,423 and in the documents cited therein.

Another way of reducing the tyre mass involves generally reducing its dimensions. Of course, such a reduction is not without consequence on the service capability of the tyre. The International standards, such as those of the ETRTO or JATMA define, for each nominal dimension, the physical dimensions of the tyre, such as its sectional height and its sectional width when fitted onto a rim of given diameter and width. At the same time, they define a "loading capacity" of the tyre, that is to say, the maximum admissible static load on a wheel of the vehicle at a given service pressure.

In such standards, the load capacities are deduced from the nominal dimensions using semi-empirical relationships. These relationships set a maximum static deflection for a tyre, normalized by its dimensions, and are based on a standard geometry of the section profiles of the tyres of the current technology. They predict that the loading capacity of tyres of course decreases when, all other things being equal, the section height or width decreases.

A reduction in the dimensions of a tyre is of course not without consequence with respect to the serviceability of the tyre, its wear lifetime and the endurance of its structure for a given service load on a wheel of the vehicle.

However, these standards leave the designer with certain degrees of freedom regarding the dimensions of the section profile that it is possible to use in the context of reducing the mass and rolling resistance of a tyre. Most of the mass of a tyre and most of its rolling resistance result from the region of its crown. Reducing the width of the crown would therefore result in an almost proportional increase in the contribution of the crown to the mass and, as experience has shown, an increase in its contribution to rolling resistance.

When a tyre is rolling on the ground under normal use conditions (in terms of speed and load), it may be subjected to shocks on the tread or sidewalls, the frequency and intensity of which are often considerable. It is one of the main functions of a tyre that it should absorb these shocks and damp them without the vehicle's wheel in question being substantially affected thereby, either in its movement or in its integrity.

However, it happens that this absorption capability encounters its limits when the impact conditions are such that the sidewall of the tyre impacted comes into abutment inside the air chamber either directly with the rim, on which the tyre is mounted, or more usually on another region of the sidewall of the tyre itself, directly bearing on the wheel rim. This is especially the case when the rim has an external radial projection relative to the actual seat. Such a projection (usually called a "rim flange") is in general provided for preventing the tyre bead from coming off the rim due to the effect of axially directed stresses during wheel manoeuvres.

The impact with an obstacle can then transfer brief, but very intense loads, possibly in certain cases reaching several tons, on the abutted parts but also, beyond the rim, on the mechanical suspension attachments for the wheel assembly, or even on the body of the vehicle. They are capable of creating serious damage on the suspension members and of permanently deforming the vehicle body. Vehicle designers therefore have to provide sufficient damping systems to prevent this damage and to design vehicle bodies in accordance with normally predictable extreme situations.

Unfortunately, even when the vehicle is, strictly speaking, suitably protected, the tyre subjected to this type of incident is liable to seriously suffer the consequences of the abovementioned phenomenon. In the section impacted by the shock, the internal wall of the tyre is suddenly folded and pinched between the obstacle and the rim flange. This may cause the wall to rupture and the tyre to suddenly lose its inflation pressure, which usually means that the vehicle is immediately immobilized. However, even when the tyre withstands this impact, it is often found that its components have been damaged by the incident: indentations in the sidewalls or other signs indicate to a tyre expert that the structure of the tyre has been weakened and that its sidewall runs the risk of rupturing under the effect of its components being repeatedly flexed, in the relative long term, which would of course be incompatible with the conditions necessary for safe driving.

It turns out that lightweight tyres of small dimensions are particularly vulnerable to this type of damage.

EP-A- 2 116 398 discloses a tyre comprising the features of the preamble of claim 1.

SUMMARY OF THE INVENTION

The objective of the present invention is to address these concerns and to reduce the risks incurred by a lightweight tyre when it is faced with the shock of contact with obstacles on a roadway, for example when encountering a pothole or a pavement.

This objective is achieved by a tyre having a rotation axis and comprising:

two beads intended to come into contact with a mounting rim, each bead comprising at least one annular reinforcing structure, defining a mid-plane which is perpendicular to the rotation axis of the tyre and located equidistant from the annular reinforcing structures of each bead, the annular reinforcing structures having, in any radial cross section, a radially innermost point;

two sidewalls extending the beads radially outwards, the two sidewalls joining in a crown comprising a crown reinforcement, having two axial ends, said crown reinforcement being surmounted by a tread;

at least one carcass reinforcement extending from the beads through the sidewalls as far as the crown, the carcass reinforcement comprising a plurality of radially oriented carcass reinforcement elements and being anchored in the two beads by an upturn around the annular reinforcing structure, so as to form an main portion and a wrapped-around portion of the carcass reinforcement,

wherein, when the tyre is fitted onto the mounting rim and inflated to its service pressure:

the tyre has a maximum axial width SW such that the ratio TW/SW $\leq$ 75% (and preferably TW/SW $\leq$ 73%), where TW denotes the axial distance between the two axial ends of the crown reinforcement, the maximum axial width SW being reached at a radial distance X from the radially innermost point of the annular reinforcing structures;

the axial distance RW of the two points of intersection of the axial direction passing through the radially innermost point of the annular reinforcing structures with the external surface of the tyre is such that TW/RW $\leq$ 85% (and preferably TW/RW $\leq$ 83%);

the tyre satisfies the following three conditions: X/SH $\leq$ 50%, Y/SH $\geq$ 80% and Z/SH $\geq$ 90%, where SH denotes the distance between the radially outermost point of the tyre and the radially innermost point of the annular reinforcing structures, Y denotes the radial distance between (i) the points on the carcass reinforcement having the same axial positions as the axial ends of the crown reinforcement and (ii) the radially innermost point of the annular reinforcing structures, and Z denotes the radial distance between the radially outermost point of the carcass reinforcement and the radially innermost point of the annular reinforcing structures;

the absolute value of the angle $\alpha$ (alpha) between the tangent to the carcass reinforcement at the points on the carcass reinforcement having the same axial positions as the axial ends of the crown reinforcement and the axial direction is less than or equal to 22°; and

at any point on the carcass reinforcement, the radius of curvature $\rho$ is such that

$$\rho = \frac{R_S^2 - R_E^2}{2R},$$

where $R_S$ is the radial distance between the rotation axis of the tyre and the radially outermost point of the carcass reinforcement, $R_E$ is the radial distance between the rotation axis of the tyre and the axial position where the tyre reaches its maximum axial width SW, and R is the radial distance between the rotation axis of the tyre and the point in question on the carcass reinforcement;

wherein each sidewall of the tyre comprises a first reinforcing member and a second reinforcing member, the first reinforcing member being reinforced by reinforcement elements placed parallel to one another, making an angle ß (beta) of between 10° and 90° with the circumferential direction, the second reinforcing member being reinforced by reinforcement elements parallel to one another, making an angle γ (gamma) of -ß with the circumferential direction; and

wherein the first and second reinforcing members extend along the carcass reinforcement, between a radially inner end and a radially outer end, the radial distance of each of the radially inner ends from the radially innermost point of the annular reinforcing structure being less than 10% of the distance SH, and the radial distance of each of the radially outer ends from the radially innermost point of the annular reinforcing structure being greater than 30% of the distance SH.

In a particular embodiment, the reinforcement elements that reinforce the first reinforcing member and the second reinforcing member may desirably be filamentary reinforcement elements, but it is also possible to use flat reinforcement elements such as, for example, strips made of thermoplastic material. In this situation, the angles are understood to mean with respect to the longitudinal direction of the strips.

According to a first preferred embodiment, the first reinforcing member is placed axially inside the main portion of the carcass reinforcement and the second reinforcing member is placed axially outside the main portion of the carcass reinforcement and axially inside the wrapped-around portion of the carcass reinforcement, e.g., over the height of the wrapped-around portion of the carcass reinforcement or some portion thereof. This embodiment makes it possible to minimize the thickness of the "inner liner" impermeable to the inflation gas, which covers the internal surface of the tyre. It also makes it possible to control the torsional stiffness of the tyre and, consequently, its cornering stiffness.

According to a second preferred embodiment, the first and second reinforcing members are placed axially outside the main portion of the carcass reinforcement and axially inside the wrapped-around portion of the carcass reinforcement, e.g., over the height of the wrapped-around portion of the carcass reinforcement, or some portion thereof. This embodiment makes it possible for the "bead filler" volume, that is to say the portion of rubber composition filling the volume between the main portion and the wrapped-around portion of the carcass reinforcement, to be very significantly reduced and for the stiffness of this region of the tyre to be modified by varying the angle of the reinforcement elements.

According to one particular embodiment, the radial distance of each of the radially outer ends of the reinforcing members from the radially innermost point of the annular reinforcing structure is greater than 80% of the distance SH. According to one particularly advantageous variant of this embodiment, the radially outer ends of the reinforcing members are axially inside the axial ends of the crown reinforcement. This embodiment makes it possible to control the torsional stiffness of the tyre and, consequently, its drift resistance. It also makes the tyre more robust with respect to perforations of the sidewall.

Preferably, in a particular embodiment the tyre has only a single carcass reinforcement so as to reduce its weight.

The invention also relates to an assembly formed by a mounting rim and a tyre as described above.

BRIEF DESCRIPTION OF THE DRAWINGS

Figure 1 shows a tyre according to the prior art.

Figure 2 shows a partial perspective view of a tyre according to the prior art.

Figure 3 shows, in radial section, one half of a reference tyre.

Figure 4 shows part of the tyre of Figure 3.

Figure 5 illustrates the parameters used to describe an inflated carcass reinforcement in equilibrium.

Figures 6 to 8 show, in radial section, a portion of a tyre according to the invention.

DETAILED DESCRIPTION OF THE FIGURES

When employing the term "radial", a distinction should be made between several different uses of the word by those skilled in the art. Firstly, the expression refers to a radius of the tyre. It is in this sense that a point P1 is said to be "radially inside" a point P2 (or "radially to the inside" of point P2) if it is closer to the rotation axis of the tyre than point P2. Conversely, a point P3 is said to be "radially outside" a point P4 (or "radially to the outside" of point P4) when it is further away from the rotation axis of the tyre than point P4. The expression "radially inwardly (or outwardly)" means going towards smaller (or larger) radii. When distances are referred to as radial distances, this meaning of the term also applies.

However, a thread or a reinforcement is said to be "radial" when the thread or reinforcing elements of the reinforcement make an angle of not less than 80° but not exceeding 90° with the circumferential direction. It should be pointed out, that in the present document, the term "thread" should be understood in a very general sense and comprises threads in the form of monofilaments, multifilaments, a cord, a folded yarn or an equivalent assembly, irrespective of the material constituting the thread or the surface treatment for promoting adhesion to the rubber.

Finally, the term "radial section" or "radial cross section" is understood here to mean a section or cross section in a plane that contains the rotation axis of the tyre.

An "axial" direction is a direction parallel to the rotation axis of the tyre. A point P5 is said to be "axially inside" a point P6 (or "axially to the inside" of point P6) off it is closer to the mid-plane of the tyre than point P6. Conversely, a point P7 is said to be "axially outside" a point P8) or "axially to the outside" of point P8) if it is further away from the mid-plane of the tyre than point P8. The "mid-plane" of the tyre is the plane which is perpendicular to the rotation axis of the tyre and located equidistant from the annular reinforcing structures of each bead. When it is said that the mid-plane separates, in any radial section, the tyre into two tyre "halves", this does not mean that the mid-plane necessarily constitutes a plane of symmetry of the tyre. The expression "tyre half' has here a broader meaning and denotes a portion of the tyre having an axial width close to one half of the axial width of the tyre.

A "circumferential" direction is a direction perpendicular both to a radius of the tyre and to the axial direction.

In the context of this document, the expression "rubber compound" denotes a rubber compound comprising at least one elastomer and at least one filler.

The "external surface" of the tyre denotes here the surface of the tyre which is intended to be in contact with the atmosphere (or with the mounting rim), as opposite to its internal surface, which is intended to be in contact with the inflation gas.

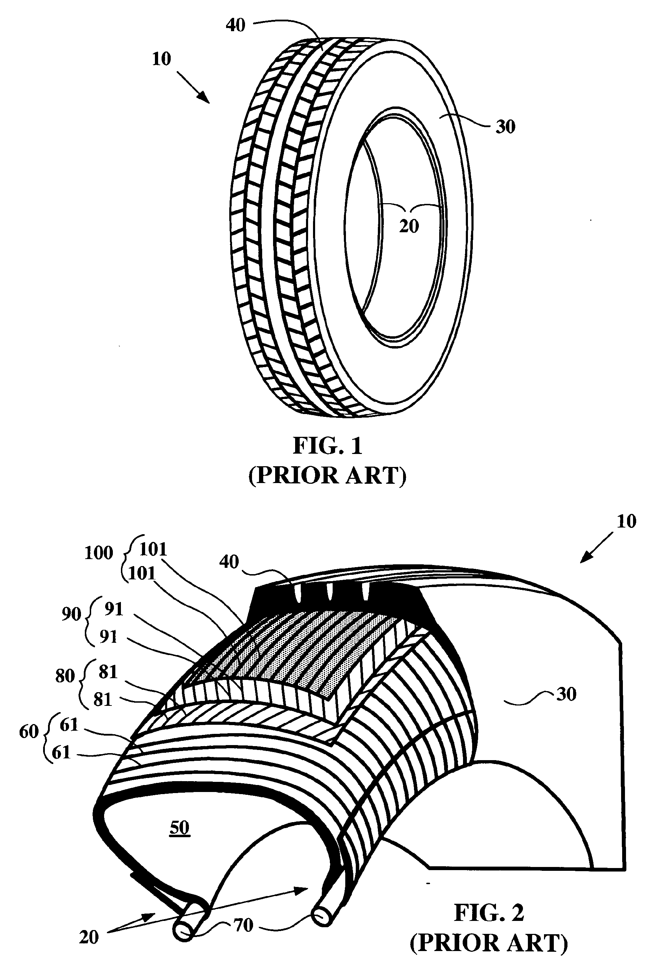

Figure 1 shows schematically a tyre 10 according to the prior art. The tyre 10 comprises a crown, having a crown reinforcement (not visible in Figure 1) surmounted by a tread 40, two sidewalls 30 extending the crown radially inwards, and two beads 20 radially inside the sidewalls 30.

Figure 2 shows schematically a partial perspective view of a tyre 10 according to the prior art and illustrates the various components of such a tyre. The tyre 10 comprises a carcass reinforcement 60 consisting of threads 61 embedded in a rubber composition, and two beads 20 each comprising annular reinforcing structures 70 which hold the tyre 10 on the rim of the wheel (not shown). The carcass reinforcement 60 is anchored in each of the beads 20 by an upturn. The tyre 10 further includes a crown reinforcement comprising two plies 80 and 90. Each of the plies 80 and 90 is reinforced by filamentary reinforcing elements 81 and 91 which are parallel in each ply and crossed from one layer to the next, making angles of between 10° and 70° to the circumferential direction. The tyre further includes a hooping reinforcement 100 placed radially outside the crown reinforcement, this hooping reinforcement being formed from circumferentially oriented reinforcing elements 101 wound in a spiral. A tread 40 is placed on the hooping reinforcement; it is via this tread 40 that the tyre 10 comes into contact with the road. The tyre 10 shown is a "tubeless" tyre: it includes an "inner liner" 50 made of a butyl-based rubber composition impermeable to the inflation gas and covering the internal surface of the tyre.

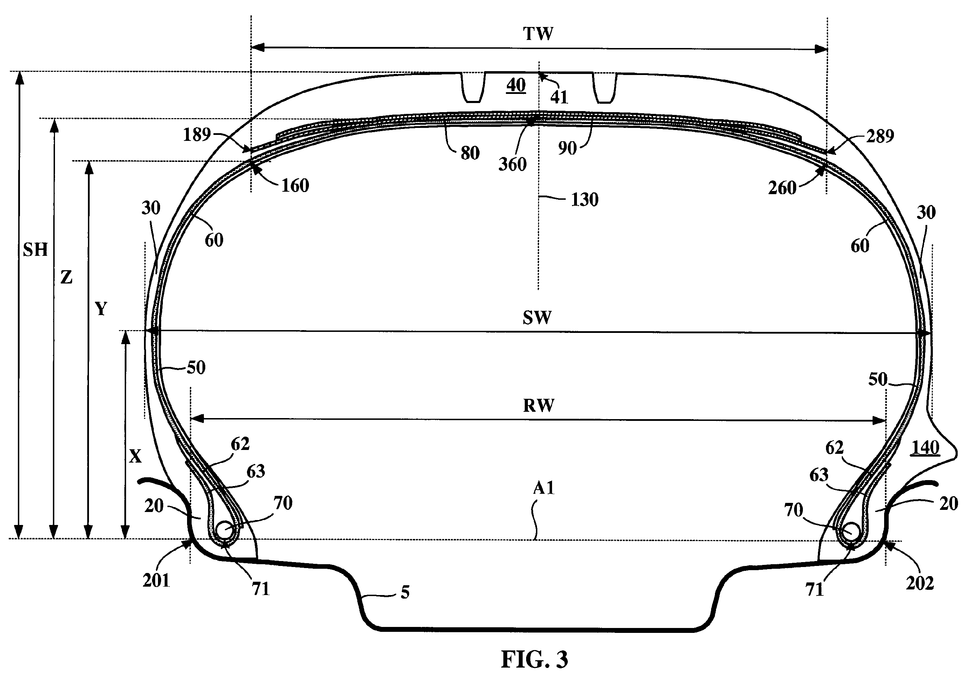

Figure 3 shows, in radial cross section, one half of a reference tyre. This tyre has a rotation axis (not shown) and comprises two beads 20 intended to come into contact with a mounting rim 5. Each bead has an annular reinforcing structure, in this case a bead wire 70. Here, the two bead wires 70 have the same diameter and there are two points 71 corresponding to the radially innermost point of the bead wires 70.

The tyre has two sidewalls 30 extending the beads radially towards the outside, the two sidewalls 30 joining in a crown having a crown reinforcement formed by the plies 80 and 90. The crown reinforcement has two axial ends 189 and 289. In the illustrated embodiment, these ends coincide with the axial ends of the radially inner ply 80, but it is also perfectly possible to provide a radially outer ply 90 that extends axially beyond the inner ply, on only one side of the mid-plane 130, or on each side of this plane, without departing from the scope of the invention. The crown reinforcement is surmounted by a tread 40. In principle, it would be possible also to provide a hooping reinforcement, such as the hooping reinforcement 100 of the tyre shown in Figure 2, but in the present case the aim was to minimize the weight of the tyre by not providing a hooping reinforcement.

The tyre comprises a single radial carcass reinforcement 60 extending from the beads 20 through the sidewalls 30 to the crown, the carcass reinforcement 60 comprising a plurality of carcass reinforcing elements. It is anchored in the two beads 20 by an upturn around the bead wire 70, so as to form a main portion 62 and a wrapped-around portion 63.

When the tyre is fitted onto the mounting rim 5 and inflated to its service pressure, it meets several criteria.

Firstly, it has a maximum axial width SW such that the ratio TW/SW ≤ 75%, where TW denotes the axial width of the crown reinforcement, i.e. the axial distance between the two axial ends 189 and 289 of the crown reinforcement. In the embodiment illustrated, TW/SW = 73%, and in a more particular embodiment, TW/SW ≤ 73%. The maximum axial width SW is reached at a radial distance X from the radially innermost point of the annular reinforcing structures. It should be pointed out that when determining the width SW, no account is taken of excrescences such as the protective bead 140.

Secondly, the axial distance RW of the two points of intersection 201 and 202 of the axial direction A1 passing through the radially innermost point(s) 71 of the bead wires 70 with the external surface of the tyre is such that TW/RW $\leq$ 85%. In the embodiment illustrated TW/RW = 83%, and in a more particular embodiment, TW/RW $\leq$ 83%.

Thirdly, X/SH $\leq$ 50% (and preferably, X/SH $\leq$ 45%), where SH denotes the distance between the radially outermost point 41 of the tyre, and the radially innermost point 71 of the annular reinforcing structures 70. In the embodiment illustrated, X/SH = 50%.

Fourthly, Y/SH $\geq$ 80%, where Y denotes the radial distance between (i) the points 160 and 260 of the carcass reinforcement 60 having the same axial positions as the axial ends 189 and 289 of the crown reinforcement and (ii) the radially innermost point 71 of the annular reinforcing structures 70, SH being defined as above. In the embodiment illustrated, Y/SH = 80%. When the carcass reinforcement 60 has a significant width, Y should be taken at the neutral fibre of the reinforcement elements 61 constituting it. In a more particular embodiment, Y/SH $\geq$ 90%.

Fifthly, Z/SH $\geq$ 90%, where Z denotes the radial distance between the radially outermost point 360 of the carcass reinforcement 60 and the radially innermost point 71 of the annular reinforcing structures 70, SH being defined as above. In embodiment illustrated, Z/SH = 90%.

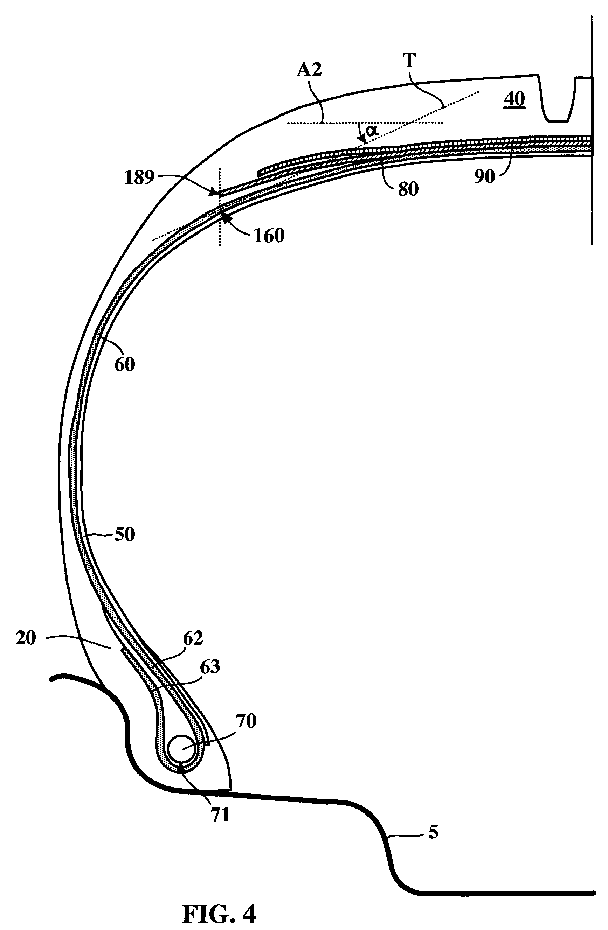

Sixthly, the absolute value of the angle $\alpha$ (alpha) - indicated in Figure 4, between the tangent T to the carcass reinforcement 60 at the points 160 and 260 of the carcass reinforcement 60 having the same axial positions as the axial end points 189 and 289 of the crown reinforcement and the axial direction, is less than or equal to 22°.

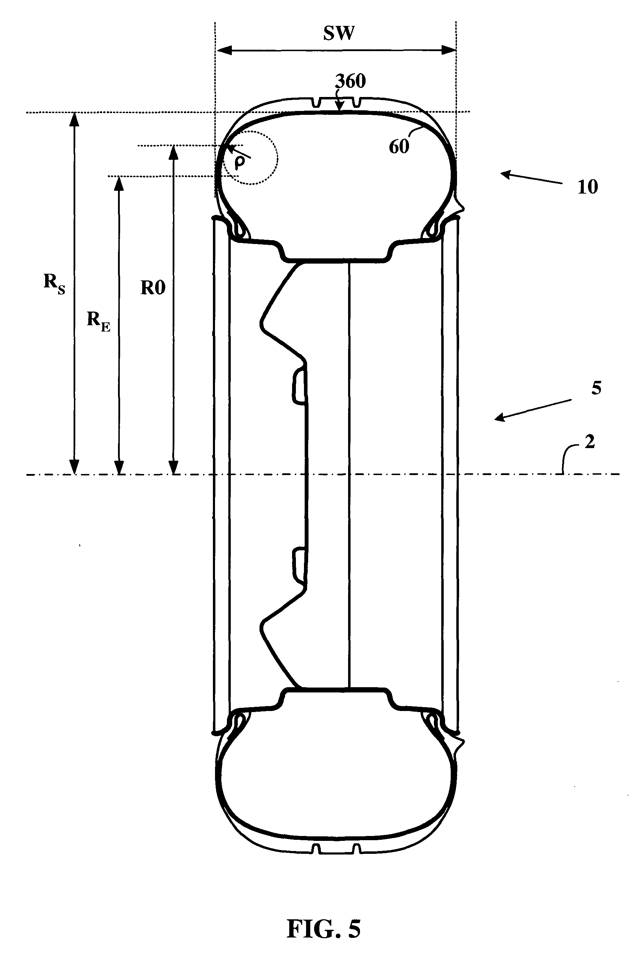

Finally, at any point on the carcass reinforcement 60, the radius of curvature $\rho$ is such that

$$\rho = \frac{R_S^2 - R_E^2}{2R},$$

where $R_S$ is the radial distance between the rotation axis of the tyre and the radially outermost point 360 of the carcass reinforcement 60, $R_E$ is the radial distance between the rotation axis of the tyre and the axial position where the tyre reaches its maximum axial width SR, and R is the radial distance between the rotation axis of the tyre and the point in question on the carcass reinforcement. These values are indicated in Figure 5, together with the radius of curvature $\rho$ for a radial position R=R0. The reference 2 indicates here the rotation axis of the tyre 10.

As is well known to those skilled in the art, the latter criterion corresponds to the equilibrium condition for an inflated radial carcass reinforcement. It serves in particular to differentiate the invention from fortuitous prior art representing uninflated tyres for which some of the criteria listed above would be fulfilled in the uninflated state, but which would no longer be fulfilled if the tyre were to be inflated and the carcass reinforcement were to be considered in the equilibrium state. An example of this is shown in Figure 1 of document WO 1999/022952 which shows a tyre that is manifestly not in equilibrium, as the fold in the carcass reinforcement close to the ends of the crown reinforcement shows.

Such a tyre makes it possible, for a given nominal tyre size, when mounted on a given mounting rim, under a given service pressure, to best benefit from the design of the geometry of the tyre to lighten it and to reduce its rolling resistance, while still maintaining its main performance characteristics, in particular its loading capacity and its capability of not loosening.

However, the Applicant has found that such a tyre may prove to have a certain vulnerability to shocks caused by obstacles that it encounters on a roadway, such as a pothole or a pavement curb.

One of the objectives of embodiments of the tyre disclosed herein is to solve this difficulty and to define a tyre which, apart from the abovementioned advantages, is more resistant to such shocks.

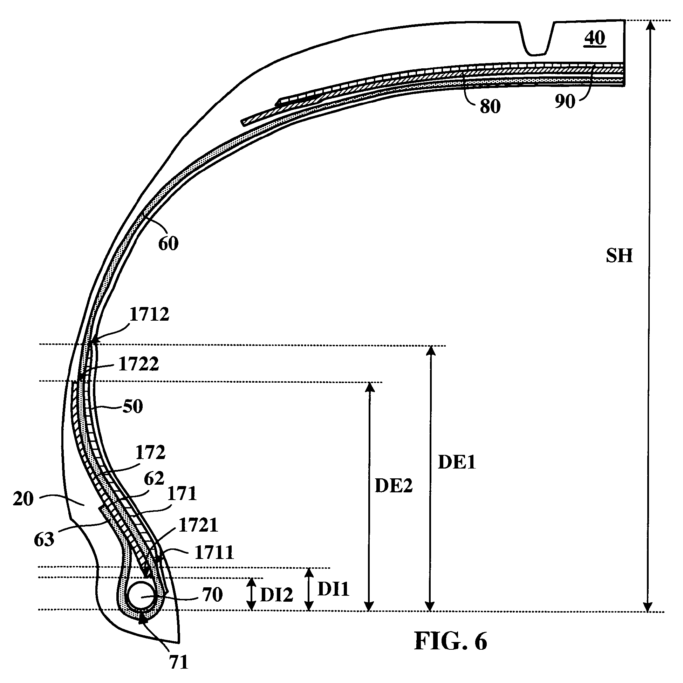

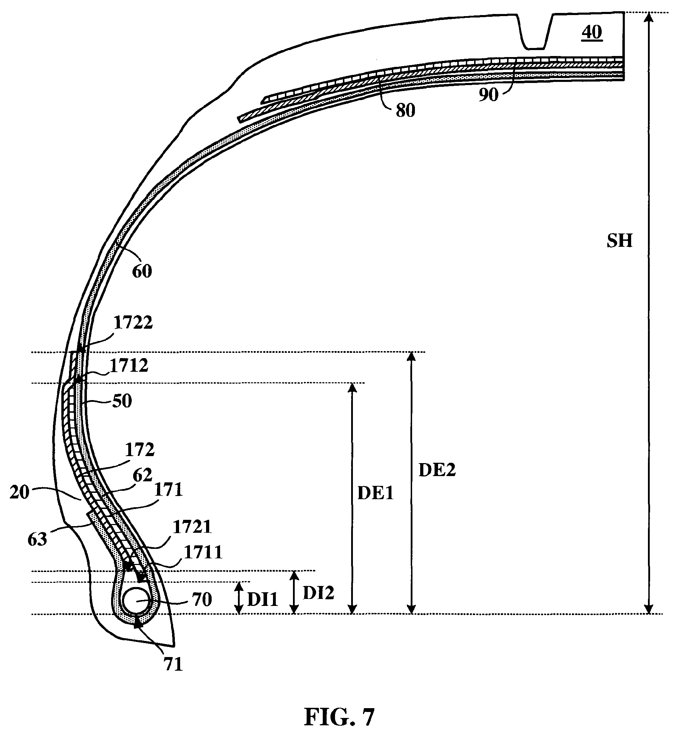

Figures 6 and 7 show, in radial section, a portion of one embodiment of a tyre according to the invention. The particular feature of such a tyre lies in the fact that each sidewall comprises two reinforcing members 171 and 172, each being reinforced by reinforcement elements, in this case parallel filamentary elements. The reinforcing members 171 and 172 are crossed: the reinforcement elements of the first reinforcing member 171 make an angle ß (beta) of between 10° and 90° to the circumferential direction and the second reinforcing member 172 makes an angle $\gamma$ (gamma) of - ß. In this case, ß = 45° and $\gamma$ = - 45°.

In particular embodiments, filamentary reinforcement elements may be made of textile materials such as PET, nylon, rayon, aramid or metal.

In the embodiment shown in Figure 6, the first reinforcing member 171 and the second reinforcing member 172 extend along the carcass reinforcement 60 between a radially inner end 1711 and 1721 and a radially outer end 1712 and 1722, the radial distance of each of the radially inner ends from the radially innermost point 71 of the annular reinforcing structure 70 being less than 10% of the distance SH and the radial distance of each of the radially outer ends from the radially innermost point 71 of the annular reinforcing structure 70 being greater than 30% of the distance SH. Thus, these reinforcing numbers extend over the entire region that risks becoming jammed between the rim flange and the radially outer portion of the tyre. For the tyre shown in Figure 6, DI1/SH = 7%, DI2/SH = 5%, DE1/SH = 45% and DE2/SH = 39%.

In the embodiment shown in Figure 6, the first reinforcing member 171 is placed axially inside the main portion 62 of the carcass reinforcement 60 and the second reinforcing member 172 is placed axially outside the main portion 62 of the carcass reinforcement and, over the height of the wrapped-around portion 63 of the carcass reinforcement 60, axially to the inside thereof.

Another embodiment is shown in Figure 7. Here, the first reinforcing member 171 and the second reinforcing member 172 are placed axially outside the main portion 62 of the carcass reinforcement and, over the height of the wrapped-around portion 63 of the carcass reinforcement, axially to the inside thereof. For the tyre shown in Figure 7, DI1/SH = 5%, DI2/SH = 7%, DE1/SH = 38% and DE2/SH = 44%.

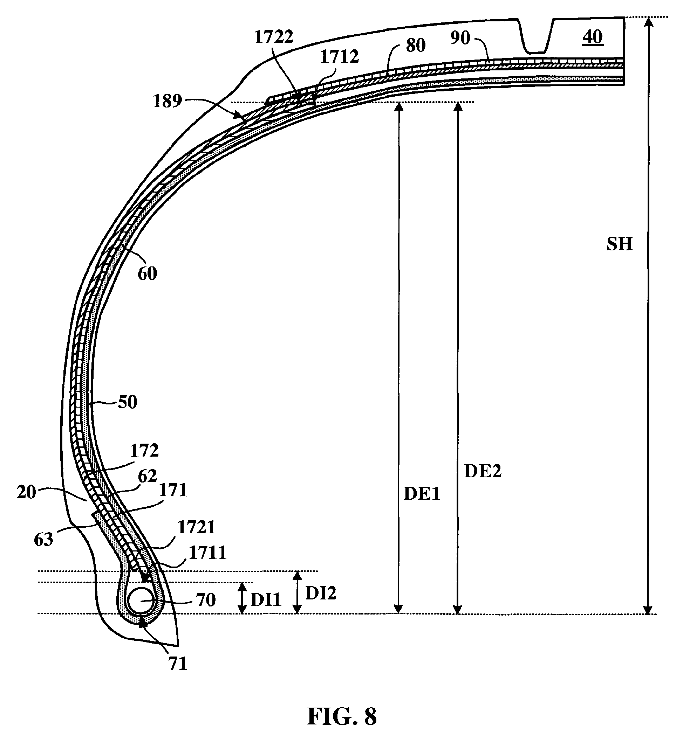

In the tyres according to the invention shown in Figures 6 and 7, the reinforcing members 171 and 172 do not rise beyond the mid-height of the tyre, but while this is illustrative, it is not necessarily required. Figure 8 shows another tyre according to the invention in which these reinforcing members extend radially further to the outside, in this case right to the crown reinforcement formed by the plies 80 and 90. Here, the radial distance of each of the radially outer ends 1712 and 1722 of the reinforcing members 171 and 172 from the radially innermost point 71 is equal to 86% of the distance SH, and the radially outer ends 1712 and 1722 of the reinforcing members 171 and 172 are axially inside the axial end 189 of the crown reinforcement formed by the plies.

Those skilled in the art will understand that the reinforcing members may extend right to the crown, even when one of these reinforcing members is placed axially inside the carcass reinforcement.

A tyre according to the invention, of 205/55 R 16 size, corresponding to the embodiment of Figure 7, was compared with a commercial "Michelin Energy Saver" tyre of the same size. The following table gives the essential geometric parameters:

Table I

|  | Energy Saver tyre | Tyre according to the invention |
|---|---|---|
| TW/RW | 1.07 | 0.83 |
| TW/SW | 0.82 | 0.73 |
| X/SH | 0.53 | 0.50 |
| Y/SH | 0.89 | 0.90 |
| Z/SH | 0.82 | 0.90 |
| $\alpha$ (alpha) | 22 | 22 |

The tyre according to the invention is 1.8 kg lighter than the reference tyre (weighing 6.2 kg instead of 8.0 kg), but its rolling resistance at 90 km/h is 1.96 kg/T lower and its main performance characteristics are equivalent, in particular its load capacity corresponding to an index of 91 (603 daN) and its ability not to unwedge.

A comparison between this tyre according to the invention and a reference tyre according to Figure 4 shows that the tyre according to the invention has a much better resistance to the shocks from obstacles on a roadway, for example when it encounters a pothole or a pavement. A reference tyre and a tyre according to the invention, when inflated to 80% of the ETRTO service pressure and loaded to 80% of the ETRTO load, were made to strike a pavement (height below rim flange +10 mm) at a speed limited to 70 km/h and at an angle of 30° to the straight-line path. It turns out that, unlike the reference tyre, the tyre according to the invention does not show any fracture of sidewall reinforcement elements, even at the maximum speed.

**Claims**

1. Tyre having a rotation axis and comprising:

   two beads (20) intended to come into contact with a mounting rim (5), each bead comprising at least one annular reinforcing structure (70), defining a mid-plane which is perpendicular to the rotation axis of the tyre and located equidistant from the annular reinforcing structures of each bead, the annular reinforcing structures having, in any radial cross section, a radially innermost point (71);
   two sidewalls (30) extending the beads radially outwards, the two sidewalls joining in a crown comprising a crown reinforcement (80, 90), having two axial ends, said crown reinforcement being surmounted by a tread (40);
   at least one carcass reinforcement (60) extending from the beads through the sidewalls as far as the crown, the carcass reinforcement comprising a plurality of radially oriented carcass reinforcement elements and being anchored in the two beads by an upturn around the annular reinforcing structure, so as to form an main portion (62) and a wrapped-around portion (63) of the carcass reinforcement,

wherein each sidewall of the tyre comprises a first reinforcing member (171) and a second reinforcing member (172), the first reinforcing member being reinforced by reinforcement elements placed parallel to one another, making an angle ß (beta) of between 10° and 90° with the circumferential direction, the second reinforcing member being reinforced by reinforcement elements parallel to one another, making an angle γ (gamma) of -ß with the circumferential direction; and

wherein the first and second reinforcing members extend along the carcass reinforcement, between a radially inner end (1711, 1721) and a radially outer end (1712, 1722), the radial distance (DI1, DI2) of each of the radially inner ends from the radially innermost point (71) of the annular reinforcing structure (70) being less than 10% of the distance SH, and the radial distance (DE1, DE2) of each of the radially outer ends from the radially innermost point (71) of the annular reinforcing structure (70) being greater than 30% of the distance SH, **characterized in that**,

when the tyre is fitted onto the mounting rim and inflated to its service pressure:

the tyre has a maximum axial width SW such that the ratio TW/SW ≤ 75%, where TW denotes the axial distance between the two axial ends (189, 289) of the crown reinforcement, the maximum axial width SW being reached at a radial distance X from the radially innermost point of the annular reinforcing structures;

the axial distance RW of the two points of intersection of the axial direction passing through the radially innermost point of the annular reinforcing structures with the external surface of the tyre is such that TW/RW ≤ 85%;

the tyre satisfies the following three conditions: X/SH ≤ 50%, Y/SH ≥ 80% and Z/SH ≥ 90%, where SH denotes the distance between the radially outermost point of the tyre and the radially innermost point of the annular reinforcing structures, Y denotes the radial distance between (i) the points on the carcass reinforcement having the same axial positions as the axial ends of the crown reinforcement and (ii) the radially innermost point of the annular reinforcing structures, and Z denotes the radial distance between the radially outermost point of the carcass reinforcement and the radially innermost point of the annular reinforcing structures;

the absolute value of the angle α (alpha) between the tangent to the carcass reinforcement at the points on the carcass reinforcement having the same axial positions as the axial ends of the crown reinforcement and the axial direction is less than or equal to 22°; and

at any point on the carcass reinforcement, the radius of curvature ρ is such that

$$\rho = \frac{R_S^2 - R_E^2}{2R},$$

where $R_S$ is the radial distance between the rotation axis of the tyre and the radially outermost point (360) of the carcass reinforcement, $R_E$ is the radial distance between the rotation axis of the tyre and the axial position where the tyre reaches its maximum axial width SW, and R is the radial distance between said rotation axis and the point in question on the carcass reinforcement.

2. Tyre according to Claim 1, wherein the ratio TW/SW is less than or equal to 73%.

3. Tyre according to Claim 1 or 2, wherein the ratio TW/RW is less than or equal to 83%.

4. Tyre according to any one of Claims 1 to 3, wherein the first reinforcing member (171) is placed axially inside the main portion (62) of the carcass reinforcement (60) and the second reinforcing member (172) is placed axially outside the main portion (62) of the carcass reinforcement (60) and, over the height of the wrapped-around portion (63) of the carcass reinforcement (60), axially inside the wrapped-around portion (63) of the carcass reinforcement (60).

5. Tyre according to any one of Claims 1 to 3, wherein the first (171) and second (172) reinforcing members are placed axially outside the main portion (62) of the carcass reinforcement (60) and, over the height of the wrapped-around portion (63) of the carcass reinforcement (60), axially inside the wrapped-around portion (63) of the carcass reinforcement (60).

6. Tyre according to any one of Claims 1 to 5, wherein the radial distance (DE1, DE2) of each of the radially outer ends (1712, 1722) of the reinforcing members (171, 172) from the radially innermost point (71) of the annular reinforcing structure (70) is greater than 80% of the distance SH.

7. Tyre according to Claim 6, wherein the radially outer ends (1712, 1722) of the reinforcing members (171, 172) are axially inside the axial ends (189, 289) of the crown reinforcement.

8. Tyre according to any one of Claims 1 to 7, wherein the reinforcement elements that reinforce said first reinforcing member (171) and second reinforcing member (172) are filamentary reinforcement elements.

9. Assembly formed by a mounting rim (5) and a tyre according to any one of Claims 1 to 8.


**Patentansprüche**

1. Reifen mit Drehachse, der Folgendes umfasst:

zwei Wülste (20), die vorgesehen sind, um mit einer Montagefelge (5) in Kontakt zu kommen, wobei jeder Wulst wenigstens eine ringförmige Verstärkungsstruktur (70) umfasst, die eine Mittelebene definiert, die zur Drehachse des Reifens senkrecht ist und abstandsgleich von den ringförmigen Verstärkungsstrukturen jedes Wulstes entfernt ist, wobei die ringförmigen Verstärkungsstrukturen in jedem Radialquerschnitt einen radial am weitesten innen liegenden Punkt (71) aufweisen;
zwei Seitenwände (30), die die Wülste radial nach außen erweitern, wobei die zwei Seitenwände sich in einer Wölbung vereinigen, die eine Wölbungsverstärkung (80, 90) mit zwei Axialenden umfasst, wobei die Wölbungsverstärkung von einer Lauffläche (40) bedeckt ist;
wenigstens eine Karkassenverstärkung (60), die sich von den Wülsten durch die Seitenwände bis zur Wölbung erstreckt, wobei die Karkassenverstärkung eine Mehrzahl an radial ausgerichteten Karkassenverstärkungselementen umfasst und in den zwei Wülsten durch eine Aufwärtsbiegung um die ringförmige Verstärkungsstruktur verankert ist, um einen Hauptabschnitt (62) und einen umgeschlagenen Abschnitt (63) der Karkassenverstärkung zu bilden,
wobei jede Seitenwand des Reifens ein erstes Verstärkungsbauteil (171) und ein zweites Verstärkungsbauteil (172) umfasst, wobei das erste Verstärkungsbauteil durch Verstärkungselemente verstärkt wird, die zueinander parallel platziert sind und einen Winkel β (beta) zwischen 10° und 90° zur Umlaufrichtung bilden, wobei das zweite Verstärkungsbauteil durch zueinander parallele Verstärkungselemente verstärkt wird, die einen Winkel γ (gamma) von -β zur Umlaufrichtung bilden; und
wobei die ersten und zweiten Verstärkungsbauteile sich entlang der Karkassenverstärkung zwischen einem radial inneren Ende (1711, 1721) und einem radial äußeren Ende (1712, 1722) erstrecken, wobei die radiale Entfernung (DI1, DI2) jedes der radial inneren Enden vom radial am weitesten innen liegenden Punkt (71) der ringförmigen Verstärkungsstruktur (70) weniger als 10 % der Entfernung SH beträgt und die radiale Entfernung (DE1, DE2) jedes der radial äußeren Enden vom radial am weitesten innen liegenden Punkt (71) der ringförmigen Verstärkungsstruktur (70) mehr als 30 % der Entfernung SH beträgt,
**dadurch gekennzeichnet, dass**, wenn der Reifen auf der Montagefelge angebracht und auf seinen Betriebsdruck aufgepumpt wird:

der Reifen eine maximale Axialbreite SW aufweist, so dass das Verhältnis TW/SW $\leq$ 75 %, wobei TW die axiale Entfernung zwischen den beiden Axialenden (189, 289) der Wölbungsverstärkung bezeichnet, wobei die maximale Axialbreite SW bei einer radialen Entfernung X vom radial am weitesten innen liegenden Punkt der ringförmigen Verstärkungsstrukturen erreicht wird;
die axiale Entfernung RW der beiden Kreuzungspunkte in axialer Richtung, die den radial am weitesten innen liegenden Punkt der ringförmigen Verstärkungsstrukturen durchlaufen, zur Außenfläche des Reifens derart ist, dass TW/RW $\leq$ 85 %;
der Reifen die folgenden drei Bedingungen erfüllt: X/SH $\leq$ 50 %, Y/SH $\geq$ 80 % und Z/SH $\geq$ 90 %, wobei SH die Entfernung zwischen dem radial am weitesten außen liegenden Punkt des Reifens und dem radial am weitesten innen liegenden Punkt der ringförmigen Verstärkungsstrukturen bezeichnet, Y die radiale Entfernung zwischen (i) den Punkten an der Karkassenverstärkung, die die gleichen Axialpositionen wie die Axialenden der Wölbungsverstärkung aufweisen, und (ii) dem radial am weitesten innen liegenden Punkt der ringförmigen Verstärkungsstrukturen bezeichnet und Z die radiale Entfernung zwischen dem radial am weitesten außen liegenden Punkt der Karkassenverstärkung und dem radial am weitesten innen liegenden Punkt der ringförmigen Verstärkungsstrukturen bezeichnet;
der Absolutwert des Winkels α (alpha) zwischen der Tangente an der Karkassenverstärkung an den Punkten an der Karkassenverstärkung, die die gleichen Axialpositionen wie die Axialenden der Wölbungsverstärkung aufweisen, und der Axialrichtung kleiner oder gleich 22° ist; und
an jedem beliebigen Punkt an der Karkassenverstärkung der Krümmungsradius ρ derart ist, dass

$$\rho = \frac{R_S^2 - R_E^2}{2R},$$

wenn Rs die radiale Entfernung zwischen der Drehachse des Reifens und dem radial am weitesten außen liegenden Punkt (360) der Karkassenverstärkung ist, RE die radiale Entfernung zwischen der Drehachse des Reifens und der Axialposition, an der der Reifen seine maximale Axialbreite SW erreicht, ist und R die radiale Entfernung zwischen der Drehachse und dem fraglichen Punkt an der Karkassenverstärkung ist.

2. Reifen nach dem Anspruch 1, wobei das Verhältnis TW/SW kleiner oder gleich 73 % ist.

3. Reifen nach dem Anspruch 1 oder 2, wobei das Verhältnis TW/RW kleiner oder gleich 83 % ist.

4. Reifen nach einem der Ansprüche 1 bis 3, wobei das erste Verstärkungsbauteil (171) axial innerhalb des Hauptabschnitts (62) der Karkassenverstärkung (60) platziert ist und das zweite Verstärkungsbauteil (172) axial außerhalb des Hauptabschnitts (62) der Karkassenverstärkung (60) und entlang der Höhe des umgeschlagenen Abschnitts (63) der Karkassenverstärkung (60) axial innerhalb des umgeschlagenen Abschnitts (63) der Karkassenverstärkung (60) platziert ist.

5. Reifen nach einem der Ansprüche 1 bis 3, wobei die ersten (171) und zweiten (172) Verstärkungsbauteile axial außerhalb des Hauptabschnitts (62) der Karkassenverstärkung (60) und entlang der Höhe des umgeschlagenen Abschnitts (63) der Karkassenverstärkung (60) axial innerhalb des umgeschlagenen Abschnitts (63) der Karkassenverstärkung (60) platziert sind.

6. Reifen nach einem der Ansprüche 1 bis 5, wobei die radiale Entfernung (DE1, DE2) jedes der radial äußeren Enden (1712, 1722) der Verstärkungsbauteile (171, 172) vom radial am weitesten innen liegenden Punkt (71) der ringförmigen Verstärkungsstruktur (70) größer als 80 % der Entfernung SH ist.

7. Reifen nach dem Anspruch 6, wobei die radial äußeren Enden (1712, 1722) der Verstärkungsbauteile (171, 172) sich axial innerhalb der Axialenden (189, 289) der Wölbungsverstärkung befinden.

8. Reifen nach einem der Ansprüche 1 bis 7, wobei die Verstärkungselemente, die das erste Verstärkungsbauteil (171) und das zweite Verstärkungsbauteil (172) verstärken, fadenförmige Verstärkungselemente sind.

9. Anordnung, die von einer Montagefelge (5) und einem Reifen nach einem der Ansprüche 1 bis 8 gebildet wird.

**Revendications**

1. Pneumatique ayant un axe de rotation et comportant :

deux bourrelets (20) destinés à entrer en contact avec une jante de montage (5), chaque bourrelet comportant au moins une structure annulaire de renforcement (70), définissant un plan médian perpendiculaire à l'axe de rotation du pneumatique et se situant à équidistance des structures annulaires de renforcement de chaque bourrelet, les structures annulaires de renforcement ayant, dans toute section radiale, un point (71) radialement le plus à l'intérieur ;
deux flancs (30) prolongeant les bourrelets radialement vers l'extérieur, les deux flancs s'unissant dans un sommet comprenant une armature de sommet (80, 90), ayant deux extrémités axiales, surmontée d'une bande de roulement (40) ;
au moins une armature de carcasse (60) s'étendant depuis les bourrelets à travers les flancs jusqu'au sommet, l'armature de carcasse comportant une pluralité d'éléments de renforcement de carcasse orientés radialement et étant ancrée dans les deux bourrelets par un retournement autour de la structure annulaire de renforcement, de manière à former un brin aller (62) et un brin retour (63) de l'armature de carcasse,

dans lequel chaque flanc du pneumatique comporte une première armature de renforcement (171) et une deuxième armature de renforcement (172), la première armature de renforcement étant renforcée par des éléments de renforcement disposés parallèles les uns aux autres, faisant avec la direction circonférentielle un angle β (beta) compris entre 10° et 90°, la deuxième armature de renforcement étant renforcée par des éléments de renforcement parallèles les uns aux autres, faisant avec la direction circonférentielle un angle γ (gamma) égal à - β;

et dans lequel la première et la deuxième armature de renforcement s'étendent le long de l'armature de carcasse, entre une extrémité (1711, 1721) radialement intérieure et une extrémité (1712, 1722) radialement extérieure, la distance radiale (DI1, DI2) de chacune des extrémités radialement intérieures par rapport au point (71) radialement le plus à l'intérieur de la structure annulaire de renforcement (70) étant inférieure à 10% de la distance SH et la distance radiale (DE1, DE2) de chacune des extrémités radialement extérieures par rapport au point (71) radialement le plus à l'intérieur de la structure annulaire de renforcement (70) étant supérieure à 30% de la distance SH,

**caractérisé en ce que** lorsque le pneumatique est monté sur la jante de montage et gonflé à sa pression de service :

le pneumatique a une largeur axiale maximale SW telle que le ratio TW/SW ≤ 75%, où TW désigne la distance axiale entre les deux extrémités axiales (189, 289) de l'armature de sommet, la largeur axiale maximale SW étant atteinte à une distance radiale X du point radialement le plus à l'intérieur des structures annulaires de renforcement ;

la distance axiale RW des deux point d'intersection de la direction axiale passant par le point radialement le plus à l'intérieur des structures annulaires de renforcement avec la surface extérieure du pneumatique est telle que TW/RW ≤ 85% ;

le pneumatique satisfait aux trois conditions : X/SH ≤ 50%, Y/SH ≥ 80% et Z/SH ≥ 90%, où SH désigne la distance entre le point radialement le plus à l'extérieur du pneumatique et le point radialement le plus à l'intérieur des structures annulaires de renforcement, Y désigne la distance radiale entre (i) les points de l'armature de carcasse ayant les mêmes positions axiales que les extrémités axiales de l'armature de sommet, et (ii) le point radialement le plus à l'intérieur des structures annulaires de renforcement, et Z désigne la distance radiale entre le point radialement le plus à l'extérieur de l'armature de carcasse et le point radialement le plus à l'intérieur des structures annulaires de renforcement ;

la valeur absolue de l'angle α (alpha) entre la tangente à l'armature de carcasse dans les points de l'armature de carcasse ayant les mêmes positions axiales que les extrémités axiales de l'armature de sommet et la direction axiale est inférieure ou égal à 22° ; et

en tout point de l'armature de carcasse, le rayon de courbure ρ est tel que

$$\rho = \frac{R_S^2 - R_E^2}{2R},$$

où $R_S$ est la distance radiale entre l'axe de rotation du pneumatique et le point (360) radialement le plus à l'extérieur de l'armature de carcasse, $R_E$ est la distance radiale entre l'axe de rotation du pneumatique et la position axiale où le pneumatique atteint sa largeur axiale maximale SW, et R est la distance radiale entre ledit axe de rotation et le point de l'armature de carcasse considéré

2. Pneumatique selon la revendication 1, dans lequel le ratio TW/SW est inférieur ou égal à 73%.

3. Pneumatique selon la revendication 1 ou 2, dans lequel le ratio TW/RW est inférieur ou égal à 83%.

4. Pneumatique selon l'une quelconque des revendications 1 à 3, dans lequel la première armature de renforcement (171) est disposée axialement à l'intérieur du brin aller (62) de l'armature de carcasse (60) et la deuxième armature de renforcement (172) est disposée axialement à l'extérieur du brin aller (62) de l'armature de carcasse (60) et, sur la hauteur du brin retour (63) de l'armature de carcasse (60), axialement à l'intérieur du brin retour (63) de l'armature de carcasse (60).

5. Pneumatique selon l'une quelconque des revendications 1 à 3, dans lequel la première (171) et la deuxième (172) armatures de renforcement sont disposées axialement à l'extérieur du brin aller (62) de l'armature de carcasse (60) et, sur la hauteur du brin retour (63) de l'armature de carcasse (60), axialement à l'intérieur du brin retour (63) de l'armature de carcasse (60).

**6.** Pneumatique selon l'une quelconque des revendications 1 à 5, dans lequel la distance radiale (DE1, DE2) de chacune des extrémités radialement extérieures (1712, 1722) des armatures de renforcement (171, 172) par rapport au point (71) radialement le plus à l'intérieur de la structure annulaire de renforcement (70) est supérieure à 80% de la distance SH.

**7.** Pneumatique selon la revendication 6, dans lequel les extrémités radialement extérieures (1712, 1722) des armatures de renforcement (171, 172) sont axialement à l'intérieur des extrémités axiales (189, 289) de l'armature de sommet.

**8.** Pneumatique selon l'une quelconque des revendications 1 à 7, dans lequel les éléments de renforcement qui renforcent ladite première armature de renforcement (171) et deuxième armature de renforcement (172) sont des éléments de renforcement filaires.

**9.** Ensemble formé par une jante de montage (5) et un pneumatique selon l'une quelconque des revendications 1 à 8.

**FIG. 1**
**(PRIOR ART)**

**FIG. 2**
**(PRIOR ART)**

FIG. 3

**FIG. 4**

**FIG. 5**

**FIG. 6**

**FIG. 7**

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6082423 A
- EP 2116398 A
- WO 1999022952 A